# EUROPEAN PATENT APPLICATION

(11) **EP 4 610 294 A1**
(43) Date of publication of application: **03.09.2025**
(21) Application number: 23883116.8
(22) Date of filing: 26.10.2023
(51) Int. Cl.: C08G 69/26, C08G 69/42, C08L 77/06, H01M 4/62, H01M 4/131, H01M 10/052, H01M 4/02

(54) **BINDER COMPRISING POLYAMIDE POLYMER, POSITIVE ELECTRODE FOR SECONDARY BATTERY COMPRISING BINDER, AND SECONDARY BATTERY COMPRISING POSITIVE ELECTRODE**

(30) Priority: 26.10.2022 KR 20220139371
(71) Applicant: Hansol Chemical Co., Ltd, Seoul 06169 (KR)
(72) Inventor: SONG, Si-Jin, Wanju-gun, Jeollabuk-do 55321 (KR); SEONG, Hoon-Moh, Wanju-gun, Jeollabuk-do 55321 (KR); KIM, Kwang-In, Wanju-gun, Jeollabuk-do 55321 (KR); HAN, Jae-Hee, Wanju-gun, Jeollabuk-do 55321 (KR); KWON, Se-Man, Wanju-gun, Jeollabuk-do 55321 (KR)
(74) Representative: Cabinet Chaillot
(86) International application number: PCT/KR2023/016718
(87) International publication number: WO 2024/091011

(57) **Abstract**

The present invention relates to: a binder comprising a polyamide polymer containing a monomer unit including an aromatic ring; a positive electrode slurry comprising same; a positive electrode; and a secondary battery.

## Description

### Technical Field

The present disclosure relates to a binder including a polyamide polymer, a slurry including the binder, an electrode, and a secondary battery.

### Background Art

Lithium secondary batteries have high energy density, so they are applied in a wide range of industrial fields, such as electrical, electronic, communication, and computer fields. Their application is expanding from small lithium secondary batteries for portable electronic devices to high-capacity secondary batteries for hybrid and electric vehicles.

In order to provide a lithium secondary battery with high energy density and excellent lifespan characteristics, it is desirable to increase the amounts of an electrode active material and a conductive agent and decrease the amount of a binder.

However, when the amount of the binder decreases, dispersibility and adhesiveness of the electrode active material and/or the conductive agent and flexibility of the electrode active material layer deteriorate decrease. Accordingly, during charging and discharging, the electrode active material may be separated from a current collector, resulting in deterioration in cycle characteristics.

Therefore, a binder capable of providing dispersibility of an electrode active material and/or a conductive agent, adhesiveness of an electrode plate, and flexibility of an electrode plate to an electrode even with a small amount of the binder is needed.

For example, a fluorine-based binder, such as polyvinylidene fluoride (PVDF) containing no polar group, undergoes less swelling in an organic electrolyte solution, and thus is useful in maintaining an electrode structure while operating a battery and may improve dispersibility of an active material.

However, PVDF has poor properties in terms of dispersibility of a conductive agent, adhesiveness of an electrode plate, and flexibility of an electrode plate. In particular, when PVDF is exposed to basic conditions for a long period of time, HF gas may be generated, causing the problem of deteriorating stability.

In addition, a non-fluorine-based binder, such as hydrogenated acrylonitrile-butadiene binder, has improved dispersibility of a conductive agent and flexibility of an electrode plate compared to the fluorine-based binder, but its adhesiveness is still poor.

Accordingly, there is a need for a binder capable of overcoming the problems of the related art, securing improved adhesiveness and flexibility at the same time, and providing excellent stability to improve lifespan characteristics of a lithium secondary battery.

### [Documents of Related Art]

### [Patent Documents]

(Patent Document 1) Korean Patent Application Publication No. 10-2016-0040125

### Disclosure

### Technical Problem

An objective of the present disclosure is to provide a binder that suppresses volume expansion of a cell by reducing swelling caused by temperature changes in an electrolyte solution, has excellent electrochemical stability due to small change even under high voltage, and does not generate harmful gases even after long-term exposure to bases, thereby improving stability and lifespan of a battery.

A further objective of the present disclosure is to provide a slurry composition that improves stability and lifespan of a battery by using the binder.

A further objective of the present disclosure is to provide a high-performance electrode (particularly, a positive electrode) to which the slurry composition is applied, and a low-cost and high-performance (excellent stability and long lifespan) secondary battery including the electrode.

The objectives of the present disclosure are not limited to those mentioned above, and other objectives not mentioned will be clearly understood by those skilled in the art from the description provided hereinafter.

### Technical Solution

The present disclosure provides a binder, including:
a polyamide polymer including a monomer unit including at least one aromatic ring.

Another aspect of the present disclosure provides a positive electrode slurry, including:
the binder; and
a positive electrode active material.

Another aspect of the present disclosure provides a positive electrode, including:
a current collector; and
a positive electrode active material layer including the binder formed on the current collector.

Another aspect of the present disclosure provides
a secondary battery, including:
the positive electrode.

### Advantageous Effects

A binder according to the present disclosure can be used in an electrode (particularly, a positive electrode) to reduce swelling of the electrode due to temperature changes in an electrolyte solution, thereby suppressing volume expansion of a cell and improving stability and coatability of a slurry.

In addition, the binder according to the present disclosure has excellent electrochemical stability due to a small change in current value under high voltage, and does not generate of harmful gases (e.g., hydrogen fluoride) even after long-term exposure to bases, thereby improving stability and lifespan of a battery.

### Description of Drawings

FIG. 1 shows the results of linear sweep voltammetry measurement for cells to which polymers for binders of Example 2 and Comparative Example 2 are applied.
FIG. 2 shows the results of cyclic voltammetry (CV) measurement for cells to which the polymers for the binders of Example 2 and Comparative Example 2 are applied.

### Best Mode

Hereinafter, the operation and effect of the present disclosure will be described in more detail through specific embodiments of the present disclosure. However, these embodiments are provided only for illustrative purposes and not intended for limiting the scope of the present disclosure.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, "a to b" and "a~b" indicating a numerical range are defined as ≥ a and ≤ b.

A binder according to one aspect of the present disclosure may include a polyamide polymer including a monomer unit including at least one aromatic ring.

In particular, the aromatic ring may be used to form a part of a backbone of the polyamide polymer. That is, the polyamide polymer may include the aromatic ring in the backbone.

Meanwhile, the polyamide polymer may not include an aliphatic ring or an aliphatic chain structure in the backbone (it may include an aliphatic ring or an aliphatic chain structure as a terminal group other than the backbone).

When a polyamide polymer includes an aliphatic ring or aliphatic chain structure in the backbone, an electrode expansion suppression effect may be low compared to a polyamide polymer including a monomer unit including at least an aromatic ring, precipitation caused by reduced solubility may occur, and electric resistance of a battery may increase, making it difficult to use as a binder.

A binder for an electrode in which the polyamide polymer including the monomer unit including the at least one aromatic ring is included may have improved electrolyte solution stability since it swells less in an electrolyte solution compared to a binder for an electrode in which a conventional PVDF-based polymer is included. Thus, volume expansion of a cell may also be reduced, thereby improving stability and lifespan of a battery.

In an embodiment, the binder may not include a fluorine atom, and may not generate hydrogen fluoride during charging and discharging of a battery in which the binder is used.

On the contrary, a currently commercialized PVDF binder includes a fluorine atom and has the problem of generating hydrogen fluoride during charging and discharging of a battery.

In an embodiment, the polyamide polymer may further include a monomer unit including sulfone.

The monomer unit including the sulfone may also include an aromatic ring. The sulfone and/or the aromatic ring of the monomer unit including the sulfone may be used to form a part of the backbone of the polyamide polymer. That is, the polyamide polymer may include the sulfone in the backbone.

When the polyamide polymer further includes the monomer unit including the sulfone, swelling of a binder for an electrode in which the polyamide polymer including the monomer unit including the aromatic ring is included with respect to an electrolyte solution may be further reduced.

In addition, due to a strong electron-attracting ability of a sulfone group in the monomer unit including the sulfone, electron stability of a benzene ring in the binder may be changed, thereby facilitating electron flow. Therefore, electrical characteristics of the binder may be improved, thereby improving electrical characteristics of a battery.

In an embodiment, the at least one aromatic ring of the polyamide polymer may be substituted with hydrogen, a hydroxyl group, a carboxyl group, a straight or branched hydrocarbon group having 1 to 4 carbon atoms, or a combination thereof.

Meanwhile, the at least one aromatic ring of the polyamide polymer may not include any substituent (i.e., it may be substituted only with hydrogen).

In an embodiment, a monomer that forms the monomer unit including the at least one aromatic ring through polymerization may include any one or more selected from the group consisting of a diamine monomer including at least one aromatic ring, a terephthaloyl chloride monomer, an isophthaloyl chloride monomer, a phthalic acid monomer, an isophthalic acid monomer, a terephthalic acid monomer, a 4,4'-dibenzoic acid monomer, and a 4,4'-dicarboxydiphenyl sulfone monomer.

In an embodiment, the diamine monomer including the at least one aromatic ring may be any one or more selected from the group consisting of p-phenylenediamine, m-phenylenediamine, 3,3'-dimethylbenzidine, 2,2'-dimethylbenzidine, 2,4-diaminotoludine, 2,6-diaminotoludine, 3,5-diaminobenzoic acid, bis(4-aminophenyl)methane, 4,4'-oxydianiline, 3,4'-diaminodiphenyl ether, 2,2-bis(4-aminophenyl)propane, bis(4-aminophenyl)terephthalate, 4,4'-diaminodiphenylmethane, 4,4'-methylene-bis(2-methylaniline), 4,4'-diaminobenzophenone, bis(4-aminophenyl)methane, and bis[4-(4-aminophenoxy)phenyl]ether.

In an embodiment, a monomer that forms the monomer unit including the sulfone through polymerization may be any one or more selected from the group consisting of bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone), 1,3-bis(4-aminophenyl sulfone), 1,4-bis(4-aminophenyl sulfone), bis [3-(3-aminophenoxy)phenyl] sulfone, bis [3-(4-aminophenoxy)phenyl] sulfone, bis [4-(3-aminophenoxy)phenyl] sulfone, and bis [4-(4-aminophenoxy)phenyl] sulfone.

In an embodiment, the polyamide polymer included in the binder according to the present disclosure may include a monomer repeating unit represented by Formula 1 below.

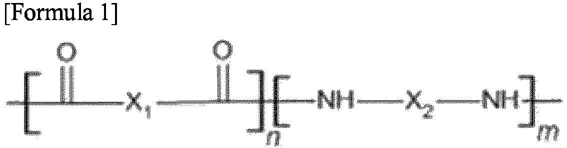

In Formula 1 above,
X₁ includes at least one aromatic ring substituted with hydrogen, a hydroxyl group, a carboxyl group, a straight or branched hydrocarbon group having 1 to 4 carbon atoms, or a combination thereof,
X₂ includes two or more aromatic rings substituted with hydrogen, a hydroxyl group, a carboxyl group, a linear or branched hydrocarbon group having 1 to 4 carbon atoms, or a combination thereof, and
n+m=1.

In Formula 1 above, n and m represent mole fractions.

In an embodiment, X₂ in Formula 1 above may be two aromatic rings substituted with hydrogen, a hydroxyl group, a carboxyl group, a straight or branched hydrocarbon group having 1 to 4 carbon atoms, or a combination thereof, which are connected to each other by a simple bond, -CH₂-, -C(CH₃)₂-, -C(=O)-, -S(=O)-, -O-, or -SO₂-; or naphthalene substituted with hydrogen, a hydroxyl group, a carboxyl group, a straight or branched hydrocarbon group having 1 to 4 carbon atoms, or a combination thereof.

In an embodiment, the polyamide polymer may include a monomer repeating unit represented by Formula 2 below.

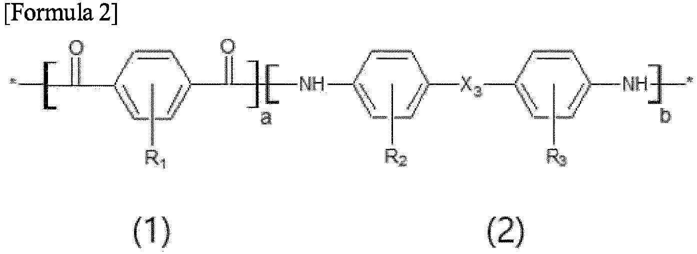

In Formula 2 above,
X₃ is a simple bond, -CH₂-, -C(CH₃)₂-, -C(=O)-, -S(=O)-, -O-, or -SO₂-,
R₁ to R₃ are each independently hydrogen, a hydroxyl group, a carboxyl group, a straight or branched hydrocarbon group having 1 to 4 carbon atoms, or a combination thereof, and
a+b=1.

In Formula 2 above, a and b represent mole fractions.

For example, the hydrocarbon having 1 to 4 carbon atoms in R₁ to R₃ in Formula 2 above may be methyl, ethyl, n-propyl, iso-propyl, n-butyl, iso-butyl, sec-butyl, or tert-butyl.

Meanwhile, the simple bond in Formulae 1 and 2 above may mean a bond in which an aromatic ring and an aromatic ring are directly connected without other atoms.

The monomer unit corresponding to (1) of Formula 2 above corresponds to a monomer unit including at least one aromatic ring.

For example, a monomer that forms the monomer unit corresponding to (1) of Formula 2 above through polymerization may be any one or more selected from the group consisting of a terephthaloyl chloride monomer, an isophthaloyl chloride monomer, a phthalic acid monomer, an isophthalic acid monomer, a terephthalic acid monomer, a 4,4'-dibenzoic acid monomer, and a 4,4'-dicarboxydiphenyl sulfone monomer.

In addition, a monomer that forms the monomer unit corresponding to (2) of Formula 2 above through polymerization may be a diamine monomer that does not include sulfone and includes at least one aromatic ring, a diamine monomer that includes sulfone and at least one aromatic ring, or a combination thereof.

For example, the monomer that forms the monomer unit corresponding to (2) of Formula 2 above through polymerization may be any one or more selected from the group consisting of p-phenylenediamine, m-phenylenediamine, 3,3'-dimethylbenzidine, 2,2'-dimethylbenzidine, 2,4-diaminotoludine, 2,6-diaminotoludine, 3,5-diaminobenzoic acid, bis(4-aminophenyl)methane, 4,4'-oxydianiline, 3,4'-diaminodiphenyl ether, 2,2-bis(4-aminophenyl)propane, bis(4-aminophenyl)terephthalate, 4,4'-diaminodiphenylmethane, 4,4'-methylene-bis(2-methylaniline), 4,4'-diaminobenzophenone, bis(4-aminophenyl)methane, bis[4-(4-aminophenoxy)phenyl]ether, bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone), 1,3-bis(4-aminophenyl sulfone), 1,4-bis(4-aminophenyl sulfone), bis [3-(3-aminophenoxy)phenyl] sulfone, bis [3-(4-aminophenoxy)phenyl] sulfone, bis [4-(3-aminophenoxy)phenyl] sulfone, and bis [4-(4-aminophenoxy)phenyl] sulfone.

In an embodiment, the polyamide polymer may have a weight average molecular weight of equal to or greater than 100,000.

In addition, the polyamide polymer may have a weight average molecular weight of equal to or less than 1,000,000.

When the weight average molecular weight of the polyamide polymer is less than 100,000, electrolyte solution stability of an electrode binder including the polyamide polymer may deteriorate. In addition, stability of an electrode slurry including a binder including the polyamide polymer may deteriorate.

On the other hand, when the weight average molecular weight of the polyamide polymer exceeds 1,000,000, viscosity may increase during slurry preparation, making slurry coating difficult.

In an embodiment, 0 mol% to 50 mol% of terephthaloyl chloride and 0 mol% to 50 mol% of isophthaloyl chloride may be used with respect to 100 mol% of the total monomers used in polymerization of the polyamide polymer.

That is, for polymerization of the polyamide polymer included in the binder according to the present disclosure, terephthaloyl chloride and isophthaloyl chloride may be used alone, or both terephthaloyl chloride and isophthaloyl chloride may be used.

When both terephthaloyl chloride and isophthaloyl chloride are included, a molar ratio of terephthaloyl chloride to isophthaloyl chloride may be 1:49 to 49:1, with respect to 100 mol% of the total monomers used in polymerization of the polyamide polymer.

For example, a molar ratio of terephthaloyl chloride to isophthaloyl chloride may be 10:40 to 40:10, 12:38 to 38:12, 12.5:37.5 to 37, 5:12.5, and 25:25, with respect to 100 mol% of the total monomers used in polymerization of the polyamide polymer.

In an embodiment, the binder according to the present disclosure may have a weight change ratio of equal to or less than 9.5% calculated by Equation 1 below when impregnated in an electrolyte solution at 60°C for 24 hours.

Meanwhile, the binder according to the present disclosure may have a weight change ratio of equal to or less than 2.0% calculated by Equation 1 below when impregnated in an electrolyte solution at 25°C for 24 hours.

Weight change ratio = ((binder film weight after 24 hours of electrolyte solution impregnation - binder film weight before electrolyte solution impregnation) / binder film weight before electrolyte solution impregnation) * 100

That is, when performing impregnation in an electrolyte solution under the same conditions, the binder according to the present disclosure exhibits reduced weight change and swelling compared to a commonly used PVDF polymer for a binder, thereby improving stability and lifespan of a battery.

In an embodiment, the binder according to the present disclosure may have a current density of equal to or less than 0.5 mA/g measured at an applied voltage of 4.5 V using linear sweep voltammetry.

That is, the binder according to the present disclosure may have stable electrochemical characteristics even at a high voltage of 4.3 to 4.5 V, thereby improving stability and lifespan of a battery.

Generally, at equal to or greater than 3 V, when a large change in current is measured, it may be determined that a polymer for a binder has undergone a side reaction, which may have a negative effect on performance of a lithium secondary battery. That is, low electrochemical stability of the polymer for the binder may cause deterioration in performance of a secondary battery.

In particular, when preparing a polyamide polymer for a binder using bis(4-aminophenyl)sulfone, terephthaloyl chloride, and isophthaloyl chloride as monomers, the amount of current at high voltage may decrease as the amount of terephthaloyl chloride increases, thereby further improving electrochemical stability of a binder.

A positive electrode slurry according to another aspect of the present disclosure may include the binder and a positive electrode active material.

That is, the binder may be used as a binder for a positive electrode.

As the positive electrode active material for forming an electrode used in the present disclosure, any positive electrode active material that is available in the relevant technical field may be used. Specific examples of the positive electrode active material may include, but are not limited thereto: lithium metal; a lithium-cobalt-based oxide such as LiCoO₂; a lithium-manganese-based oxide such as Li₁₊ₓMn₂₋ₓO₄ (wherein, x is 0 to 0.33), LiMnO₃, LiMn₂O₃, and LiMnO₂; a lithium-copper-based oxide such as Li₂CuO₂; a vanadium oxide such as LiV₃O₈, V₂O₅, and Cu₂V₂O₇; a lithium-nickel-based oxide expressed as LiNi₁₋ₓMₓO₂ (wherein, M=Co, Mn, Al, Cu, Fe, Mg, B, or Ga and x=0.01 to 0.3); a lithium manganese composite oxide expressed as LiMn₂₋ₓMₓO₂ (wherein, M=Co, Ni, Fe, Cr, Zn, or Ta, and x=0.01 to 0.1) or Li₂Mn₃MO₈ (wherein, M=Fe, Co, Ni, Cu, or Zn); a lithium-nickel-manganese-cobalt-based oxide expressed as Li(NiₐCo_{b}Mn_{c})O₂ (wherein, 0 < a < 1, 0 < b < 1, 0 < c < 1, a+b+c=1); a sulfur or disulfide compound; a phosphate such as LiFePO₄, LiMnPO₄, LiCoPO₄, and LiNiPO₄; and Fe₂(MoO₄)₃.

Here, the positive electrode active material layer may further include a dispersant, a conductive agent, a filler, and other additives in addition to the positive electrode active material.

The positive electrode active material may be included in an amount of 90 wt% to 99 wt% in terms of solid content. When the amount of the active material is low, a battery may not provide high capacity. When the amount of the active material is too high, the amounts of a binder, a conductive agent, and the like may be relatively low, resulting in deterioration in electrode adhesiveness, conductivity, and the like.

The conductive agent is not particularly limited and may be appropriately selected depending on the type of battery or capacitor. For example, in the case of a lithium-ion secondary battery, carbon such as graphite and activated carbon may be used, and in the case of a nickel-hydrogen secondary battery, cobalt oxide may be used, and nickel powder, cobalt oxide, titanium oxide, carbon, and the like may be used for a negative electrode.

Examples of the carbon may include acetylene black, furnace black, graphite, carbon fiber, fullerenes, and carbon nanotubes.

The amount of the conductive agent used is usually 1 to 20 parts by weight, preferably 2 to 10 parts by weight, with respect to 100 parts by weight of an electrode active material.

As the amount of the conductive agent decreases and the amount of the positive electrode active material increases, energy density of a secondary battery may be improved. Therefore, it is important to achieve high efficiency even when using the same amount of the conductive agent.

A conductive agent used in an electrode slurry for a secondary battery has higher conductive efficiency as it is dispersed more uniformly in a smaller size, thereby lowering resistance within a battery, improving output characteristics, and improving lifespan characteristics. When the conductive agent is dispersed unevenly in a large size, adhesiveness characteristics and conductivity may decrease even when it is used in the same amount, which may have a negative effect on lifespan characteristics and output characteristics of a battery. In addition, when a dispersion has a low viscosity, a solid content of slurry may be increased to improve electrode production speed.

In addition to the binder including the polyamide polymer including the monomer unit including the aromatic ring according to the present disclosure, as a binder for a positive electrode of a secondary battery, any one selected from the group consisting of poly(meth)acrylic acid, poly(meth)acrylamide, carboxymethyl cellulose, polyvinylidene fluoride, a polyhexafluoropropylene-polyvinylidene fluoride copolymer (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrenebutadiene rubber, acrylonitrile-butadiene rubber, and copolymers thereof, or a mixture of two or more thereof may be used.

The amount of the binder in the positive electrode slurry composition is preferably 0.3 wt% to 10 wt% in terms of solid content, and more preferably 0.7 wt% to 8 wt%. When the amount is less than 0.3 wt%, it may be difficult to achieve sufficient adhesiveness within a current collector and an electrode composition. When the amount exceeds 10 wt%, a binder ratio within an electrode slurry composition may increase, resulting in a reduction in battery capacity.

A positive electrode according to another aspect of the present disclosure may include a current collector; and a positive active material layer including the binder according to the present disclosure formed on the current collector.

The positive electrode may be manufactured through the steps of (a) preparing a composition for forming a positive electrode active material layer including a positive electrode active material and the binder according to the present disclosure, and (b) applying the composition for forming the positive electrode active material layer onto a positive electrode current collector and then drying the composition.

The composition for forming the positive electrode active material layer may be stirred by a conventional method using a conventional mixer, such as a high-shear mixer and a homo mixer.

Step (b) is a step of manufacturing a positive electrode for a lithium secondary battery by applying the composition for forming the positive electrode active material layer prepared in step (a) onto the positive electrode current collector and then drying the composition.

Here, the method of applying the composition for forming the positive electrode active material layer in the form of slurry is not limited, and examples thereof may include doctor blade coating, dip coating, gravure coating, slit die coating, spin coating, comma coating, bar coating, reverse roll coating, screen coating, and cap coating.

After coating, drying may be performed to finally manufacture a positive electrode for a secondary battery (particularly, a lithium secondary battery) in which a positive electrode active material layer is formed.

The current collector may be used as long as it has conductivity and does not chemically react with a slurry for forming an electrode. Representative examples thereof may include aluminum foil and copper foil. A current collector having a thickness of 3 to 50 micrometers may be selected and used.

A secondary battery according to another aspect of the present disclosure may include the positive electrode.

Meanwhile, a secondary battery including a positive electrode including the binder according to the present disclosure, a negative electrode, a separator, and an electrolyte solution may be manufactured.

The separator needs to be an insulator that can separate the negative electrode and the positive electrode, and needs to provide a passage through which only lithium ions can migrate. To this end, the separator needs to have good impregnating ability to the electrolyte solution, and a porous polymer film such as PE/PP and porous non-woven fabric may be used. To prevent a battery short-circuit, a coated separator coated with ceramics or other materials that enhance heat resistance and mechanical strength may be used, and may be coated in a single layer or multiple layers.

The separator may be formed of a porous substrate. As the porous substrate, any porous substrate commonly used in electrochemical devices may be used. For example, a polyolefin-based porous membrane or a non-woven fabric may be used, but is not particularly limited thereto.

The separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more thereof.

The electrolyte solution of the lithium secondary battery is a non-aqueous electrolyte solution containing a lithium salt, and is composed of a lithium salt and a solvent. As the solvent, a non-aqueous organic solvent, an organic solid electrolyte, and an inorganic solid electrolyte may be used.

The lithium salt is a substance that is easily dissolved in the non-aqueous electrolyte solution. Examples thereof may include LiCl, LiBr, LiI, LiClO₄, LiBF₄, LiB₁₀Cl₁₀, LiPF₆, LiAsF₆, LiSbF₆, LiAlCl, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)₂NLi, lithium chloroborate, lower aliphatic lithium carbonate, lithium tetraphenyl borate, and imide.

The non-aqueous organic solvent may be a non-aprotic organic solvent, and examples thereof may include, N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyltetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte may include polyethylene derivatives, polyethylene oxide derivatives, polypropylene oxide derivatives, phosphate ester polymers, poly algitation lysine, polyester sulfide, polyvinyl alcohol, polyvinylidene fluoride, and polymers including ionic dissociation groups.

Examples of the inorganic solid electrolyte may include nitrides, halides, and sulfates of lithium such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

In addition, in the non-aqueous electrolyte solution, other additives may be further added for the purpose of improving charge/discharge characteristics, flame retardancy, and the like. Examples of the additives may include pyridine, triethylphosphite, triethanolamine, cyclic ether, ethylenediamine, n-glyme, hexaphosphate triamide, nitrobenzene derivatives, sulfur, quinone imine dye, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to not only a conventional winding process but also a lamination stack/folding process of a separator and electrodes. In addition, a casing of the battery may be cylindrical, rectangular, pouch-shaped, or coin-shaped.

### Mode for Invention

Hereinafter, the present disclosure will be described in more detail through examples, but the present disclosure is not limited to these examples.

### Preparation Example 1. Preparation of Polymer for Binder

### [Examples and Comparative Examples]

In a 500 ml four-necked flask under a nitrogen atmosphere, 4,4'-oxydianiline (ODA), which is a monomer that forms a monomer unit including an aromatic ring, or any one of bis(4-aminophenyl)sulfone (p-APS) and bis(3-aminophenyl)sulfone (m-APS), which are monomers that form a monomer unit including sulfone, was selected as shown in Table 1 below, and added in an adjusted amount and dissolved with 290 ml of N-methyl-2-pyrrolidone (NMP).

After lowering the temperature of the prepared solution to equal to or less than 5°C, terephthaloyl chloride (TPC) and/or isophthaloyl chloride (IPC), which are monomers that form a monomer unit including an aromatic ring, were selected as shown in Table 1 below, added in an adjusted amount, and reacted for 5 hours.

Afterwards, the synthesized solution was dropped into a beaker including ethanol for precipitation, and then filtered, washed, and dried in a vacuum oven at 90°C. Finally, polyamide polymers for binders of Examples 1 to 7 and Comparative Examples 1 and 2 were prepared.

As Comparative Example 2, Solef 5130 PVDF polymer from SOLVAY, which is currently widely used as a binder for a positive electrode, was purchased and used.

Meanwhile, Comparative Example 1 used the same monomer components and the same molar ratio between the monomer components as in Example 2, but the reaction conditions were changed to adjust a molecular weight of the polyamide polymer for the binder.

A weight average molecular weight of each polymer binder of Examples 1 to 7 and Comparative Examples 1 and 2 was measured by gel permeation chromatography (GPC) using NMP as a solvent.

In preparation of the polymers, whether a catalyst was used and the weight average molecular weight of the prepared polymers are shown in Table 1 below.

**Table 1**

| | Ingredients and amount (with respect to 100 mol% of the total monomers used) | | Weight average molecular weight |
|---|---|---|---|
| Example 1 | p-APS: 50.0 mol% | TPC: 50.0 mol% | 237,000 |
| Example 2 | p-APS: 50.0 mol% | TPC: 37.5 mol% | 234,000 |
| | | IPC: 12.5 mol% | |
| Example 3 | p-APS: 50.0 mol% | TPC: 25.0 mol% | 232,000 |
| | | IPC: 25.0 mol% | |
| Example 4 | p-APS: 50.0 mol% | TPC: 12.5 mol% | 227,000 |
| | | IPC: 37.5 mol% | |
| Example 5 | p-APS: 50.0 mol% | IPC: 50.0 mol% | 204,000 |
| Example 6 | m-APS: 50.0 mol% | TPC: 37.5 mol% | 223,000 |
| | | IPC: 12.5 mol% | |
| Example 7 | ODA: 50.0 mol% | TPC: 37.5 mol% | 219,000 |
| | | IPC: 12.5 mol% | |
| Comparative Example 1 | p-APS: 50.0 mol% | TPC: 37.5 mol% | 94,000 |
| | | IPC: 12.5 mol% | |
| Comparative Example 2 | PVDF: 100 mol% | | 1,100,000 |

### Preparation Example 2. Preparation of Positive Electrode Slurry

7.5 g of each polymer for a binder of Examples 1 to 7 and Comparative Examples 1 and 2 dissolved with 10 wt% of N-methyl pyrrolidone, 48.9 g of a positive electrode active material (NCM622: Posco Chemical Co., Ltd.), 8.1 g of a solution in which CN-03Y from Advanced Nano Products Co., Ltd. as a conductive agent dissolved with 5 wt% of N-methyl pyrrolidone, and 6.9 g of N-methyl pyrrolidone were mixed using a planetary centrifugal mixer (ARE-310, Thinky) to prepare a positive electrode slurry. At this time, a solid content of the slurry was 70 wt%.

### Preparation Example 3. Manufacture of Cell

Each binder of Examples 1 to 7 and Comparative Example 2 was dried (dried at 70°C for 4 hours and then dried at 70°C under vacuum at equal to or greater than 1 MPa for 12 hours) to produce a film. The film was then cut out using a 16-pi (π) puncher and prepared. A coin cell was manufactured and used by sequentially arranging a lower cell cover, a gasket, a metal disc, a lithium foil, the prepared binder film, a metal disc, a spring, and an upper cell cover.

The characteristics of the polymers for the binders of Examples 1 to 7 and Comparative Examples 1 and 2 and positive electrode slurries, positive electrodes, and cells produced using them according to Preparation Examples 2 and 3 were evaluated as follows.

### [Evaluation Example 1] Measurement of Stability of Positive Electrode Slurry

In order to evaluate stability of each of the positive electrode slurries prepared according to Preparation Example 2 using the polymers for the binders of Examples 1 to 7 and Comparative Examples 1 and 2, 50 g of the positive electrode slurry was placed in a 70 ml vial and left to rest for 12 hours. Then, an upper layer slurry and a lower layer slurry were each extracted. The extracted upper layer slurry and lower layer slurry were dried at 180°C for 30 minutes. A difference in solid content between the upper layer slurry and lower layer slurry to an initial solid content (70 wt%) was measured.

### [Evaluation Example 2] Measurement of Coatability of Positive Electrode Slurry

Each of the positive electrode slurries prepared according to Preparation Example 2 using the polymers for the binders of Examples 1 to 7 and Comparative Examples 1 and 2 was placed on a grind gauge (grindometer, Model 601/100), and a top plate was pushed with a scraper. Coatability of the positive electrode slurry was measured according to the ASTM D1210 standard.

### [Evaluation Example 3] Measurement of Weight Change Ratio by Electrolyte Solution

Each of the polymers for the binders of Examples 1 to 7 and Comparative Examples 1 and 2 was cast into a square shape of 0.1 g and 20 mmX20 mm in size, and then dried (dried at 70°C for 4 hours and then dried under vacuum conditions at 70°C for 12 hours) to produce a binder film. The dried binder film was placed in 16 g of an electrolyte solution (solid content 0.6 wt%) and impregnated at 25°C or 60°C for 24 hours. The swollen binder film was taken out, the electrolyte solution on its surface was removed, and a weight of the film was measured to calculate a degree of expansion with respect to the electrolyte solution.

The electrolyte solution was 1.0 M LiPF₆ (ethylene carbonate (EC): dimethyl carbonate (DMC): ethyl methyl carbonate (EMC) = 2:1:7 vol%) with 20 wt% of fluoroethylene carbonate (FEC) added with respect to 100 wt% of the total electrolyte solution. Weight change ratio = ((binder film weight after 24 hours of electrolyte solution impregnation - binder film weight before electrolyte solution impregnation) / binder film weight before electrolyte solution impregnation) * 100

### [Evaluation Example 4] Linear Sweep Voltammetry Measurement

Electrochemical stability of the polymers for the binders of Examples 1 to 7 and Comparative Example 2 was measured at a rate of 0.5 mV/s from 0 V to 6 V by a linear sweep voltammetry (LSV) method using biologic electrochemical equipment.

For linear sweep voltammetry measurement, the cells manufactured according to Preparation Example 3 were used.

### [Evaluation Example 5] Cyclic Voltammetry (CV) Measurement

Using the cells manufactured according to Preparation Example 3, an experiment was conducted by repeating charging and discharging at a rate of 10 mV/s in a voltage range of 2 V to 4.3 V for up to 50 cycles.

The positive electrode slurry stability and the positive electrode slurry coatability of the polymers of Examples 1 to 7 and Comparative Examples 1 and 2 were measured according to Evaluation Examples 1 and 2, and the results are shown in Table 2 below.

**Table 2**

| Used polymer for binder | Slurry stability | Slurry coatability |
|---|---|---|
| Example 1 | ○ | ○ |
| Example 2 | ○ | ○ |
| Example 3 | ○ | ○ |
| Example 4 | ○ | ○ |
| Example 5 | ○ | ○ |
| Example 6 | ○ | ○ |
| Example 7 | ○ | ○ |
| Comparative Example 1 | X | ○ |
| Comparative Example 2 | ○ | ○ |

| | | |
|---|---|---|
| (good: ∘, normal: △, poor: X) | | |

According to the evaluation results of the slurry stability in Table 2 above, when the difference in solid content between the upper and lower layer slurries to the initial solid content of 70 wt% was equal to or less than ±1.0%, it was indicated as good (∘), and when the difference in solid content exceeded ±1.0%, it was indicated as poor (X).

Meanwhile, the slurry coatability was evaluated using a grind gauge. When no line formation due to particles was observed at equal to or greater than 50 µm in a coating thickness range of 50 µm to 100 µm, it was indicated as good (∘), and when line formation due to particles was observed at equal to or greater than 50 µm, it was indicated as poor (X).

The positive electrode slurry stability and positive electrode slurry coatability of the polymers of Examples 1 to 7 were both evaluated as good.

In comparison, the polyamide polymer for the binder of Comparative Example 1, which was prepared by adjusting the weight average molecular weight to less than 100,000, showed a significantly lower slurry stability than the polyamide polymers for the binders of Examples 1 to 7.

The weight change ratio and solubility change of the binder films manufactured using the polymers for the binders of Examples 1 to 7 and Comparative Examples 1 and 2 after electrolyte solution impregnation were measured according to Evaluation Example 3, and the results are shown in Table 3 below.

In order to evaluate the solubility change, when measuring the weight change ratio of the binder film after electrolyte solution impregnation according to Evaluation Example 3, it was determined whether the binder films were dissolved in an electrolyte solution.

The solubility of the binder films was evaluated by the change in color of the electrolyte solution (when the binder film was partially dissolved, the color of the electrolyte solution was slightly yellow) and the change in weight of the film (i.e., when the weight of the film decreased, it was determined to be dissolved).

**Table 3**

| Used polymer for binder | Weight change ratio (%) (relative to initial weight) | | Solubility | |
|---|---|---|---|---|
| | After 25°C/24 hr electrolyte solution impregnation | After 60°C/24 hr electrolyte solution impregnation | After 25°C/24 hr electrolyte solution impregnation | After 60°C/24 hr electrolyte solution impregnation |
| Example 1 | 1.3 | 7.8 | insoluble | insoluble |
| Example 2 | 1.9 | 8.1 | insoluble | insoluble |
| Example 3 | 1.3 | 7.7 | insoluble | insoluble |
| Example 4 | 1.5 | 8.0 | insoluble | insoluble |
| Example 5 | 1.8 | 8.3 | insoluble | insoluble |
| Example 6 | 1.4 | 7.8 | insoluble | insoluble |
| Example 7 | 1.9 | 9.3 | insoluble | insoluble |
| Comparative Example 1 | 2.7 | 9.8 | insoluble | insoluble |
| Comparative Example 2 | 19.0 | 31.7 | insoluble | insoluble |

When the polymers for the binders of Examples 1 to 7 and Comparative Examples 1 and 2 were used, none of them dissolved in the electrolyte solution even after impregnation in the electrolyte solution at 25°C or 60°C for 24 hours.

In the case of application to a secondary battery, when the polymer for the binder is dissolved in the electrolyte solution, a gap between positive electrode materials may increase and excessive swelling may occur, resulting in deterioration in electrical characteristics such as a short circuit.

In Examples 1 to 7, the weight change ratio was 1.3% to 1.9% after impregnation in the electrolyte solution under a condition of 25°C/24 hr, and the weight change ratio was 7.8% to 9.3% after impregnation in the electrolyte solution under a condition of 60°C/24 hr.

In comparison, when the polymers for the binders of Comparative Examples 1 and 2 were used, the weight after impregnation in the electrolyte solution at 25°C for 24 hours increased by 2.7% and 19%, respectively, compared to the weight before impregnation in the electrolyte solution, and the weight change was greater than when the polymers for the binders of Examples 1 to 7 were used.

In addition, in the case of impregnation for 24 hours at a relatively high temperature of 60°C, when the polymers for the binders of Comparative Examples 1 and 2 were used, the weight after impregnation in the electrolyte solution increased by 9.8% and 31.7%, respectively, compared to the weight before impregnation in the electrolyte solution, and the weight change was greater than when the polymers for the binders of Examples 1 to 7 were used.

From this, it was confirmed that when the polymers for the binders of Examples were used, a lower weight change ratio was shown compared to when the PVDF polymer for the binder of Comparative Example 2 was used.

In addition, when comparing the cases where the polymers for the binders of Example 2 and Comparative Example 1, which differ only in molecular weight, were used, it was confirmed that the weight change ratio increased when the molecular weight was lowered to less than 100,000.

That is, since the weight change before and after impregnation in the electrolyte solution is not large compared to the polymers for the binders of Examples 1 to 7 and Comparative Examples 1 and 2, when the polymers for the binders of Examples 1 to 7 are applied to an electrode, swelling of the electrode caused by use of a battery may be greatly reduced compared to when the polymers for the binders of Comparative Examples 1 and 2 are applied to an electrode.

The reduction in swelling of the electrode due to use of the polymers for the binders of Examples 1 to 7 may contribute to improving stability and lifespan of a battery.

Meanwhile, as a result of linear sweep voltammetry measurement for the polymers for the binders of Examples 1 to 7 according to Evaluation Example 4, it was confirmed that a stable shape was maintained at a voltage of 4.3 V to 4.5 V. That is, a current density was maintained constant without any change at a voltage of 4.3 V to 4.5 V.

In particular, when using p-APS, the change in current density was further reduced as the amount of TPC increased compared to IPC.

As a result of linear sweep voltammetry measurement for the polymers for the binders of Examples 1 to 7, all of them had a current density of equal to or less than 0.5 mA/g at 4.5 V.

In comparison, as a result of linear sweep voltammetry measurement for the polymer for the binder of Comparative Example 2, it had a current density of greater than 0.5 mA/g at 4.5 V.

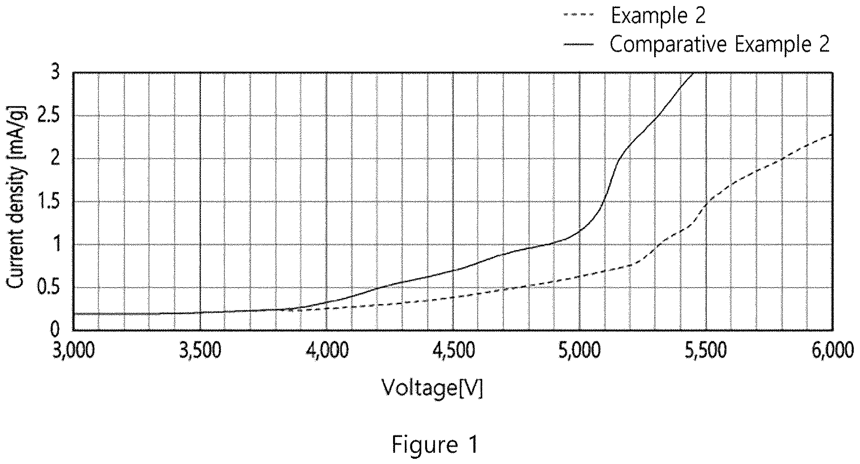

FIG. 1 exemplarily shows the results of linear sweep voltammetry measurement for the polymers for the binders of Example 2 and Comparative Example 2.

The polymer for the binder of Comparative Example 2 showed a greater change in current density at a voltage of 4.0 V to 4.5 V than the polymer for the binder of Example 2, and this trend became more evident as voltage increased.

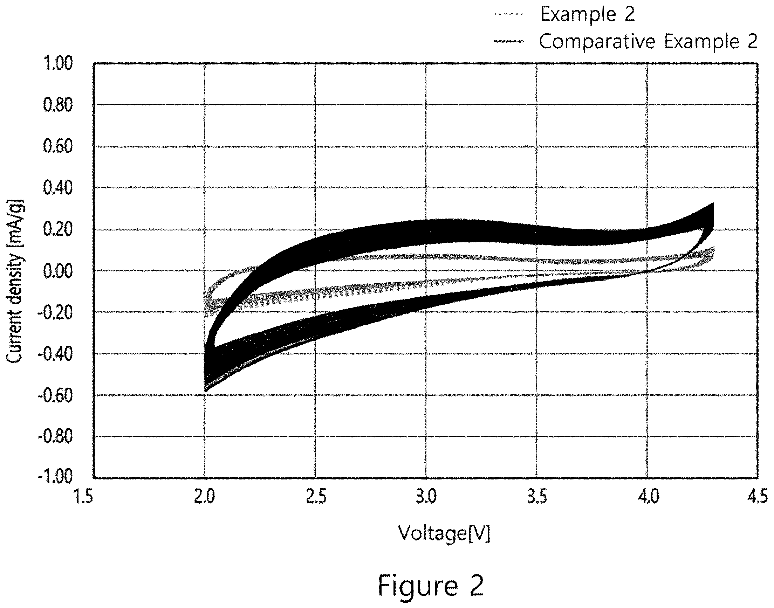

In addition, as shown in FIG. 2, as a result of cyclic voltammetry (CV) measurement for the polymers for the binders of Example 2 and Comparative Example 2 according to Evaluation Example 5, it was confirmed that the change due to oxidation/reduction of the polymer for the binder of Example 2 was reduced compared to the polymer for the binder of Comparative Example 2.

Through linear sweep voltammetry measurement according to Evaluation Example 4 and cyclic voltammetry (CV) measurement according to Evaluation Example 5, it was confirmed that the polymer for the binder according to the present disclosure had excellent electrochemical stability.

As a result, it was confirmed that the binder according to the present disclosure including the polyamide polymer had excellent electrolyte solution stability, slurry stability, and slurry coatability, and also had excellent electrochemical stability, thereby improving performance of a battery.

The scope of the present disclosure is defined by the accompanying claims rather than the description which is presented above, and all of changes and modifications obtained from the meaning and range of claims and equivalent concepts should be construed as being included in the scope of the present disclosure.

### Industrial Applicability

A binder according to the present disclosure is used in an electrode (particularly, a positive electrode) to reduce swelling of the electrode due to temperature changes in an electrolyte solution, thereby suppressing volume expansion of a cell and improving stability and coatability of a slurry.

In addition, the binder according to the present disclosure has excellent electrochemical stability due to a small change in current value under high voltage, and does not generate of harmful gases (e.g., hydrogen fluoride) even after long-term exposure to bases, thereby improving stability and lifespan of a battery.

## Claims

1. A binder, comprising:
a polyamide polymer including a monomer unit including at least one aromatic ring.

2. The binder of claim 1, wherein the binder does not include fluorine atoms, and does not generate hydrogen fluoride during charging and discharging of a battery in which the binder is used.

3. The binder of claim 1, wherein the polyamide polymer further includes a monomer unit including sulfone.

4. The binder of claim 1, wherein the at least one aromatic ring is substituted with hydrogen, a hydroxyl group, a carboxyl group, a straight or branched hydrocarbon group having 1 to 4 carbon atoms, or a combination thereof.

5. The binder of claim 1, wherein a monomer that forms the monomer unit including the at least one aromatic ring through polymerization includes any one or more selected from the group consisting of a diamine monomer including at least one aromatic ring, a terephthaloyl chloride monomer, an isophthaloyl chloride monomer, a phthalic acid monomer, an isophthalic acid monomer, a terephthalic acid monomer, a 4,4'-dibenzoic acid monomer, and a 4,4'-dicarboxydiphenyl sulfone monomer.

6. The binder of claim 5, wherein the diamine monomer including the at least one aromatic ring is any one or more selected from the group consisting of p-phenylenediamine, m-phenylenediamine, 3,3'-dimethylbenzidine, 2,2'-dimethylbenzidine, 2,4-diaminotoludine, 2,6-diaminotoludine, 3,5-diaminobenzoic acid, bis(4-aminophenyl)methane, 4,4'-oxydianiline, 3,4'-diaminodiphenyl ether, 2,2-bis(4-aminophenyl)propane, bis(4-aminophenyl)terephthalate, 4,4'-diaminodiphenylmethane, 4,4'-methylene-bis(2-methylaniline), 4,4'-diaminobenzophenone, bis(4-aminophenyl)methane, and bis[4-(4-aminophenoxy)phenyl]ether.

7. The binder of claim 3, wherein a monomer that forms the monomer unit including the sulfone through polymerization is any one or more selected from the group consisting of bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone), 1,3-bis(4-aminophenyl sulfone), 1,4-bis(4-aminophenyl sulfone), bis [3-(3-aminophenoxy)phenyl] sulfone, bis [3-(4-aminophenoxy)phenyl] sulfone, bis [4-(3-aminophenoxy)phenyl] sulfone, and bis [4-(4-aminophenoxy)phenyl] sulfone.

8. The binder of claim 1, wherein the polyamide polymer includes a monomer repeating unit represented by Formula 1 below, 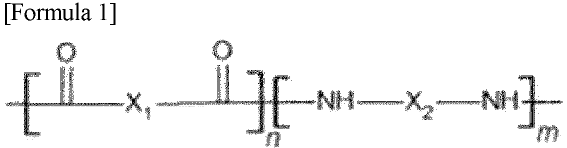 wherein, in Formula 1 above,
X₁ includes at least one aromatic ring substituted with hydrogen, a hydroxyl group, a carboxyl group, a straight or branched hydrocarbon group having 1 to 4 carbon atoms, or a combination thereof, and
X₂ includes two or more aromatic rings substituted with hydrogen, a hydroxyl group, a carboxyl group, a linear or branched hydrocarbon group having 1 to 4 carbon atoms, or a combination thereof, and
n+m=1.

9. The binder of claim 8, wherein X₂ in Formula 1 above is two aromatic rings substituted with hydrogen, a hydroxyl group, a carboxyl group, a straight or branched hydrocarbon group having 1 to 4 carbon atoms, or a combination thereof, which are connected to each other by a simple bond, -CH₂-, -C(CH₃)₂-, -C(=O)-, -S(=O)-, -O-, or -SO₂-; or
naphthalene substituted with hydrogen, a hydroxyl group, a carboxyl group, a straight or branched hydrocarbon group having 1 to 4 carbon atoms, or a combination thereof.

10. The binder of claim 1, wherein the polyamide polymer includes a monomer repeating unit represented by Formula 2 below, 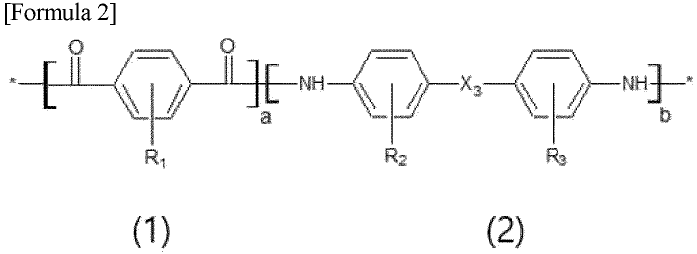 wherein, in Formula 2 above,
X₃ is a simple bond, -CH₂-, -C(CH₃)₂-, -C(=O)-, -S(=O)-, -O-, or -SO₂-,
R₁ to R₃ are each independently hydrogen, a hydroxyl group, a carboxyl group, a straight or branched hydrocarbon group having 1 to 4 carbon atoms, or a combination thereof, and
a+b=1.

11. The binder of claim 1, wherein the polyamide polymer has a weight average molecular weight of 100,000 to 1,000,000.

12. The binder of claim 5, wherein 0 mol% to 50 mol% of the terephthaloyl chloride and 0 mol% to 50 mol% of the isophthaloyl chloride are used with respect to 100 mol% of the total monomers used in polymerization of the polyamide polymer.

13. The binder of claim 1, wherein the binder has a weight change ratio of equal to or less than 9.5% calculated by Equation 1 below when impregnated in an electrolyte solution at 60°C for 24 hours, Weight change ratio = ((binder film weight after 24 hours of electrolyte solution impregnation - binder film weight before electrolyte solution impregnation) / binder film weight before electrolyte solution impregnation) * 100

14. The binder of claim 1, wherein the binder has a current density of equal to or less than 0.5 mA/g or less measured at an applied voltage of 4.5 V using linear sweep voltammetry.

15. A positive electrode slurry, comprising:
the binder of any one of claims 1 to 14; and
a positive electrode active material.

16. A positive electrode, comprising:
a current collector; and
a positive electrode active material layer including the binder of any one of claims 1 to 14 formed on the current collector.

17. A secondary battery, comprising:
the positive electrode of claim 16.
